(19)

Europäisches
Patentamt
European
Patent Office
Office européen
des brevets

(11) **EP 1 952 943 A2**

(12) **EUROPEAN PATENT APPLICATION**

(43) Date of publication:
**06.08.2008 Bulletin 2008/32**

(51) Int Cl.:
***B24B 9/14*** *(2006.01)*  ***B28D 1/14*** *(2006.01)*

(21) Application number: **08001727.0**

(22) Date of filing: **30.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.02.2007 JP 2007024897**

(71) Applicant: **Nidek Co., Ltd.**
**Gamagori-shi**
**Aichi (JP)**

(72) Inventor: **Takeichi, Kyoji**
**Gamagori-shi,**
**Aichi (JP)**

(74) Representative: **Hager, Thomas Johannes**
**Hoefer & Partner**
**Patentanwälte**
**Pilgersheimer Strasse 20**
**81543 München (DE)**

(54) **Eyeglass lens processing apparatus**

(57)    An apparatus includes:
a drilling tool (400,435) forming a hole through a lens;
an inclining unit (400,430) inclining the drilling tool;
an inputting unit (5) for selecting an input screen in which hole position data referring to a lens front surface is input or an input screen in which hole position data referring to a lens rear surface is input;
a setting unit (535,550,552,553,554,555) setting an angle of the hole;

a measuring unit (300F,300R) measuring the lens surface in a direction of a lens chuck shaft; and
a controller (5) that, when a reference surface referred by the input hole position data is the lens surface other than the lens surface from which the drilled is performed, measures the other lens surface and obtains data for drilling which defines that the hole passes through a hole position on the other lens surface and has the set angle based on the input hole position data.

FIG. 1

EP 1 952 943 A2

**Description**

Background of the Invention

The present invention relates to an eyeglass lens processing apparatus for processing a hole for attaching a rimless frame to an eyeglass lens.

There is known an eyeglass lens processing apparatus having a drilling tool for processing a hole for attaching a rimless frame called a "two points" frame and performs drilling by moving the drilling tool relatively to the front surface of an eyeglass lens held in a lens chuck (for example, see US-2006-0178086-A1 (JP-A-2006-189659) hereinafter referred to as Patent Reference 1). In such a kind of apparatus, hole position data for drilling are inputted. At this time, for the purpose of forming the hole with the tip of the drilling tool oriented toward the lens front surface, the hole position data are inputted with respect to a target lens shape seen from the lens front surface.

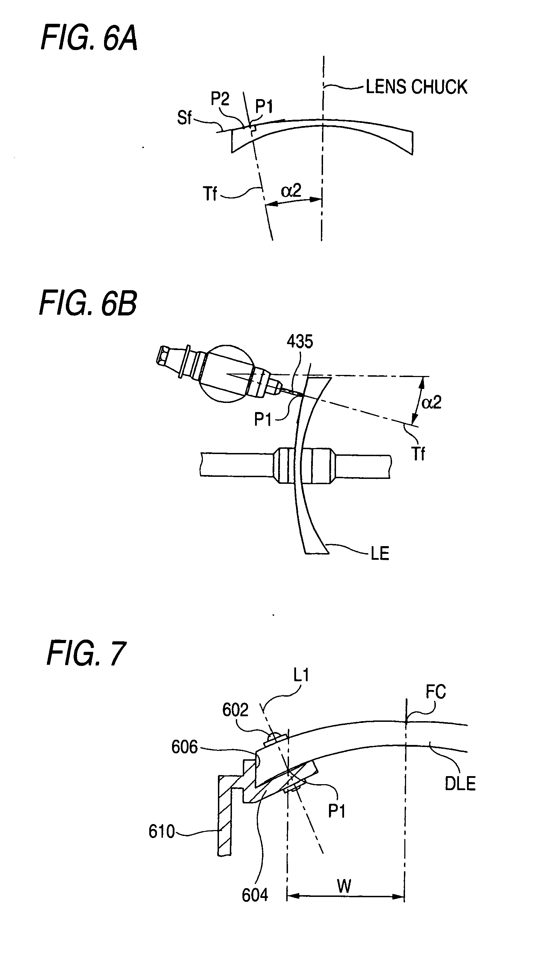

Meanwhile, the rimless frame called the "two points" frame is classified under a front fixing type in which an endpiece having a turn stopper is located on the front side of the lens (hereinafter referred to as a front fixing frame) and a rear fixing type in which the endpiece is located on the rear surface of the lens (hereinafter referred to as a rear fixing frame) (see Fig. 7). In the case of the front fixing frame, by inputting the hole position data referred to the target lens shape on the lens front surface by means of the apparatus disclosed in Patent Reference 1, the hole can be easily processed.

On the other hand, in the case of the rear fixing frame, in the drilling based on the hole position data referred to the target lens shape on the lens front side, if a demo lens and a processed lens are greatly different in their front curve, rear curve, lens thickness (power), etc., the hole position formed on the lens rear surface will be deviated from that of the demo lens. In this case, the fitting degree between the lens actually attached and the endpiece of the frame becomes worse. In order to deal with this problem, it is necessary for an operator to set the hole position data referred to the lens front surface in consideration of a difference in the front curve and relationship of a hole angle between the demo lens and the processed lens. However, a skill and an experience are needed so that it was not easy to appropriately process the hole.

Summary of the Invention

It is a technical problem of the invention to provide an eyeglass lens processing apparatus capable of appropriately setting a hole position for the rear fixing frame and capable of appropriately carrying out drilling.

In order to resolve the above-described problem, the invention is characterized in providing the following arrangements.

(1) An eyeglass lens processing apparatus for processing a periphery of an eyeglass lens, the apparatus comprising:

a drilling tool which is arranged to perform a drilling from a front side or a rear side of the lens to form a hole through the lens;
an inclining unit that inclines a processing axis of the drilling tool by an arbitrary angle relative to a lens chuck shaft:
a hole position data inputting unit that includes a selector for selecting an input screen in which hole position data referring to a lens front surface is to be input or an input screen in which hole position data referring to a lens rear surface is to be input:
a hole angle setting unit that includes a setting screen for setting an angle of the hole to be formed through the lens, and a selector for selecting if the angle of the hole coincides with a normal line of a lens surface of the lens;
a lens position measuring unit that measures the lens surface in a direction of the lens chuck shaft by bringing a measuring piece into contact with the lens front surface and/or the lens rear surface; and
an arithmetic and controlling unit that, in the case that a reference surface referred by the input hole position data is the lens surface from which the drilled is performed by the drilling tool, measures the lens surface from which the drilled is performed and obtains data for drilling based on the measured lens surface and the input hole position data, and in the case that the reference surface is the lens surface other than the lens surface from which the drilled is performed, measures the other lens surface and obtains data for drilling which defines that the hole to be formed passes through a hole position on the measured other lens surface and has the set angle based on the input hole position data.

(2) The eyeglass lens processing apparatus according to (1), wherein
the drilling tool is arranged to perform the drilling from the lens front surface;
when the hole position data referring to the lens front surface is input by the hole position data inputting unit and the angle of the hole is set by the hole angle setting unit to coincide with the normal line of the lens front surface, the arithmetic and controlling unit obtains an inclination angle of the hole position on the lens front surface by the lens position measuring unit and obtains a direction of the normal line based on the inclination angle.

(3) The eyeglass lens processing apparatus according to (1) further comprising an inputting unit that inputs a front surface curve of the lens,
wherein the drilling tool is arranged to perform the drilling from the lens front surface,
wherein when the hole position data referring to the lens rear surface is input by the hole position data inputting unit and the angle of the hole is set by the hole angle setting unit to coincide with the normal line of the lens front surface, the arithmetic and controlling unit obtains a hole position on the lens rear surface and a position of the lens front surface which is separated from a processing center of the lens by a length by which the obtained hole position is separated from the processing center, and obtains a direction of the normal line and a processing starting position on the lens front surface based on the input front surface curve.

(4) The eyeglass lens processing apparatus according to (1), wherein
the drilling tool is arranged to perform the drilling from the lens front surface,
when the hole position data deferring to the lens rear surface is input by the hole position data inputting unit and the angle of the hole is set by the hole angle setting unit to coincide with the normal line of the lens front surface, the arithmetic and controlling unit obtains the hole position on the lens rear surface by the lens position measuring unit and obtains an angle of the normal line based on position data of at least two points on the lens front surface, the two points being located further than the obtained hole position on the lens rear surface from a processing center of the lens.

(5) The eyeglass lens processing apparatus according to (1), further comprising:

a flat-finishing tool that includes a processing surface for flat-finishing an end surface of the lens to be inclined inwardly by a predetermined angle;
an edge position detector that detects edge positions on the lens front surface and the lens rear surface based on a target.lens shape data;
a correcting unit that inputs hole position data referring to the lens rear surface, obtains an edge position on the lens rear surface expected after the finishing based on the edge positions of the lens front surface and the lens rear surface detected by the edge position detector and the predetermined angle of the end surface, and corrects the hole position on the lens rear surface input by the hole position data inputting unit based on a difference between the obtained edge position of the lens rear surface and an edge position of the target lens shape data.

(6) The eyeglass lens processing apparatus according to (5), wherein the lens position measuring unit includes the edge position detector.

(7) The eyeglass lens processing apparatus according to (1), wherein the hole position data inputting unit includes a display for displaying a target lens shape diagram and a display controller that laterally inverting the target lens shape diagram depending on whether the hole position data is referred to the lens front surface or the lens rear surface.

<u>Brief Description of the Drawings</u>

Fig. 1 is a schematic structural view of an eyeglass lens processing apparatus according to the present invention.
Fig. 2 is a schematic structural view of a lens edge position measuring unit.
Fig. 3 is a schematic structural view of drilling and grooving mechanism.
Fig. 4 is a control block diagram of an eyeglass lens processing apparatus.
Figs. 5A to 5B are views of a hole editing screen.
Figs. 6A to 6B are views for explaining the manner of vertically forming a hole on the lens front surface.
Fig. 7 is a partial sectional view of a rear fixing frame.
Fig. 8 is a view for explaining the manner of setting a hole position referred to the rear surface and vertically forming the hole on the front surface.
Fig. 9 is a view for explaining another arithmetic of the manner of vertically forming the hole on the front surface.
Figs. 10A to 10B are views for explaining the case of processing a lens edge so as to have an inclination.
Figs. 11 A to 11 B are views for explaining the problem when a demo lens and a processed lens are greatly different in their rear curve.

Fig. 12 is a view for explaining the arithmetic when a demo lens and a processed lens are greatly different in their rear curve.

Description of the Preferred Embodiments

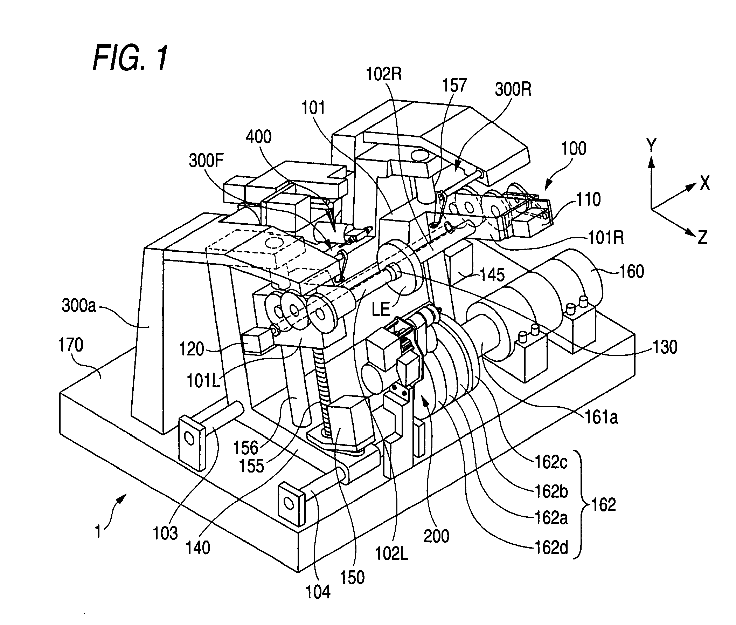

Now referring to the drawings, an embodiment of the invention will be explained as follows. Fig. 1 is a schematic structural view of an eyeglass lens peripheral edge processing apparatus according to the invention.

A carriage portion 100 including a carriage 101 and a moving mechanism thereof is mounted on a base 170. A processed lens LE is rotated by being held (chucked) by lens chucks 102L and 102R rotatably held by the carriage 101, and is ground by a grindstone 162 constituting a processing piece attached to a grindstone spindle 161 rotated by a grindstone rotating motor 160 fixed onto the base 170. The grindstone 162 of the embodiment includes a roughing grindstone 162a, a bevel-finishing and flat-finishing grindstone 162b, a bevel-polishing and flat-polishing grindstone 162c, and a roughing grindstone 162d for a glass lens. The grindstones 162a through 162d are coaxially attached to the grindstone spindle 161.
The lens chucks 102L and 102R are held by the carriage 101 such that center axes thereof (rotational center axis of lens LE) is in parallel with a center axis of the grindstone spindle 161 (rotational axis of grindstone 162). The carriage 101 is movable in a direction of the center axis of the grindstone spindle 161 (direction of center axes of lens chucks 102L and 102R) (X axis direction), and movable in a direction orthogonal to the X axis direction (direction of changing distance between center axes of lens chucks 102L and 102R and center axis of grindstone spindle 161) (Y axis direction).

The lens chuck 102L is held by a left arm 101 L of the carriage 101 and the lens chuck 102R is held by a right arm 101 R of the carriage 101 rotatably and coaxially, The right arm 101 R is fixed with a lens holding (chucking) motor 110 and the lens chuck 102R is moved in a direction of the center axis by rotating the motor 110. Thereby, the lens chuck 102R is moved in a direction of being proximate to the lens chuck 102L, and the lens LE is held (chucked) by the lens chucks 102L and 102R. Further, the left arm 101 L is fixed with a lens rotating motor 120, the lens chucks 102L and 102R are rotated in synchronism with each other by rotating the motor 120 to rotate the lens LE held (chucked) thereby.

A moving support base 140 is movably supported by guide shafts 103 and 104 fixed in parallel above the base 170 and extended in the X axis direction. Further, an X axis direction moving motor 145 is fixed above the base 170, the support base 140 is moved in the X axis direction by rotating the motor 145, and the carriage 101 supported by the guide shafts 156 and 157 fixed to the support base 140 is moved in the X axis direction.

The carriage 101 is movably supported by the guide shafts 156 and 157 fixed in parallel to the support base 140 and extended in the Y axis direction. Further, the support base 140 is fixed with a Y axis direction moving motor 150, and the carriage 101 is moved in the Y axis direction by rotating the motor 150.

In Fig. 1, a chamfering mechanism 200 is arranged on this side of the carriage 100. The chamfering mechanism 200, which is well known, will not be explained here (see, for example, JP-A-2006-239782).

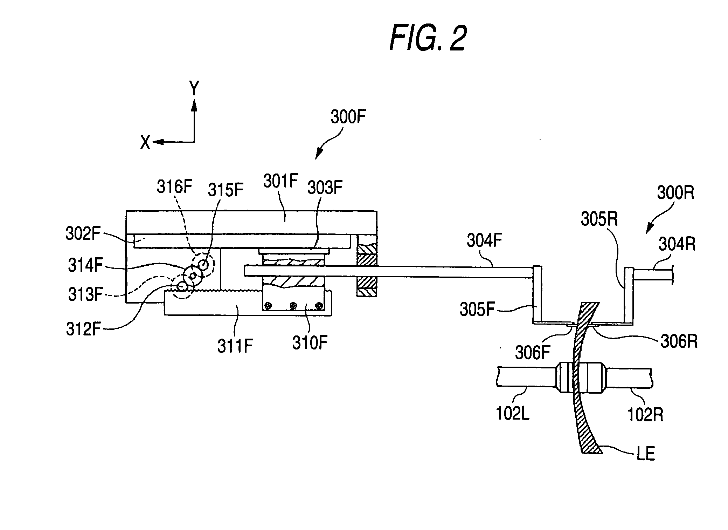

In Fig. 1, lens edge position measuring portions (lens surface position measuring portions) 300F and 300R are arranged on the carriage 101. Fig. 2 is a schematic structural view for measuring of the lens measuring portion 300F for measuring the lens edge position on the lens front surface. An attached support base 301 F is fixed to a support base block 300a fixed on the base 170 in Fig. 1. A slider 303F is slidably attached on a rail 302F fixed on the attached support base 301 F. A slide base 310F is attached to the slider 303F. A measuring piece arm 304F is fixed to the slide base 310F. An L-shape hand 305F is fixed to the tip of the measuring piece arm 304F, and a measuring piece 306F is fixed to the tip of the hand 305. The measuring piece 306F is brought into contact with the front reflecting surface of the lens LE.

A lower end of the slide base 310F is fixed with a rack 311F. The rack 311F is brought in mesh with a pinion 312F of an encoder 313F fixed to the attached support base 301 F. Rotation of the motor 316F is transmitted to the rack 311 F by way of a gear 315F, an idle gear 314F and the pinion 312F, and slide base 310F is moved in the X axis direction. While the lens edge position is measured, the motor 316F presses the measuring piece 306F to the lens LE always by a constant force. The encoder 313F detects the moving position in the X-axis direction of the slide base 310F The edge position (inclusive of the lens front surface position) on the front surface of the lens LE is measured using the information on the moving position, the information on the rotating angle of the axes of the lens chucks 102L and 102R and their moving information in the Y-axis direction.

The lens measuring portion 300R for measuring the edge position of a rear surface of the lens LE is symmetrical with the lens measuring portion 300F in a left and right direction, and therefore, with "R" substituted for "F" at the ends of the symbols appended to the respective constituent elements of the measuring portion 300F in Fig. 2, an explanation of the arrangement thereof will be omitted.

The lens edge position will be measured in such a manner that the measuring piece 306F is brought into contact with the front surface of the lens and the measuring piece 306R is brought into contact with the rear surface of the lens. In this state, the carriage 101 is moved in the Y axis direction on the basis of a target lens shape data, and the lens LE is rotated to thereby simultaneously measure edge data of the front surface of the lens and the rear surface of the lens for processing the lens peripheral edge. Where the drilling is set, on the basis of the inputted hole position data, the measuring piece 306F and the measuring piece 306R are brought into contact with the front surface and the rear surface of the lens, respectively so that the lens front surface position and lens rear surface position at the hole position are measured.

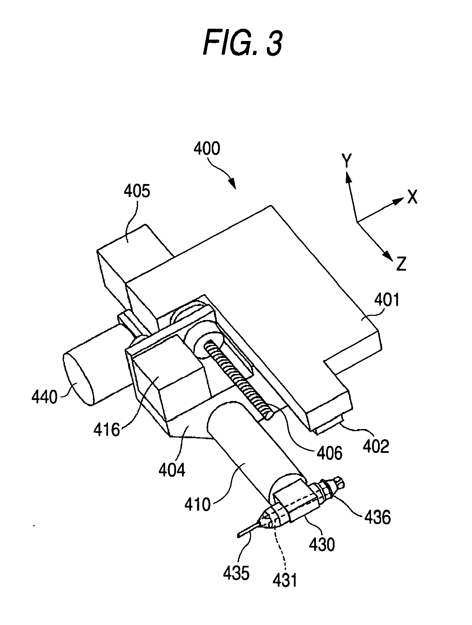

In Fig. 1, a drilling and grooving mechanism 400 is arranged on a rear side of the carriage 100. Fig. 3 is a schematic structural view of the mechanism 400. A fixed plate 401 constituting a base of the mechanism 400 is fixed to a block (not illustrated) provided upright on the base 170 in Fig. 1. The fixed support base 401 is fixed with a rail 402 extended in a Z direction (direction orthogonal to XY axes plane). Further, a Z axis moving support base 404 is slidably attached along the rail 402. The moving support base 404 is moved in the Z axis direction by rotating a ball screw 406 by a motor 405. A rotating support base 410 is rotatably held by the moving support base 404. The rotating support base 410 is rotated around an axis thereof by a motor 416 by way of a rotation transmitting mechanism.

The tip of the rotating support base 410 is attached with a rotating portion 430. A rotating shaft 431 orthogonal to an axial direction of the rotating support base 410 is rotatably held in the rotating portion 430. The one end of the rotating shaft 431 is coaxially attached with an end mill 435 serving as a drilling tool. Further, the other end of the rotating shaft 431 is coaxially attached with a groove cutter 436 serving as a grooving piece. The rotating shaft 431 is rotated by a motor 440 attached to the moving support base 404 by way of a rotation transmitting mechanism arranged inside the rotating portion 430 and the rotating support base 410. In this embodiment, the end mill 435 is directed to the lens front surface so that the drilling is carried out from the lens front surface side. Incidentally, the present invention is not limited to the above arrangement, and such an arrangement may be also employed that the drilling is carried out from the lens rear surface side.

Further, the arrangement of the carriage portion 100, the lens edge position measuring portion 300F and 300R and the drilling and grooving mechanism 400 basically similar to those described in US6790124 (JP-A-2003-145328), and their detailed explanation will not be given here.

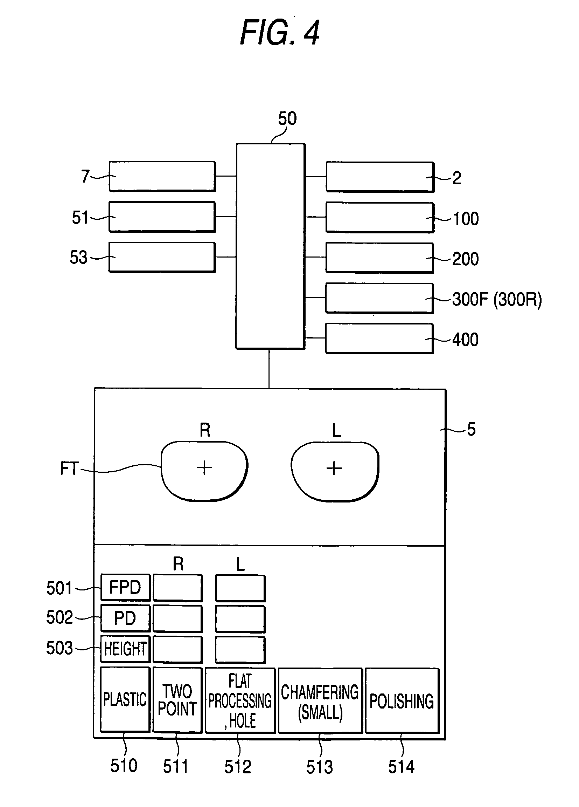

Fig. 4 is a control block diagram of an eyeglass lens peripheral edge processing apparatus. A control portion 50 is connected with an eyeglass frame measuring portion 2 (apparatus described in US5333412 (JP-A-4-93164) can be used), a display 5 serving as a display portion and an input portion of a touch panel type, a switch portion 7, a memory 51, the carriage portion 100, the chamfering mechanism 200, the lens edge position measuring portions 300F and 300R, the drilling and grooving mechanism 400, etc. An input signal to the apparatus can be inputted by touching the display of the display 5 by a touch pen (or the finger). The control portion 50 receives the input signal by a touch panel function provided to the display 5 and controls to display diagrams and information of the display 5. Further, the control portion 50 is connected with a grinding water supply portion 53 for supplying grinding water to the processed surface of the lens when the peripheral edge of the lens LE is processed.

The operation of the apparatus having the above-described arrangement will be explained. Here, an explanation will be given mainly on the drilling. In a case of a rimless frame called the "two points" frame, a target lens shape is provided from a template or a demo lens. The target lens shape data provided by the eyeglass frame measuring apparatus 2 is stored in the memory 51 by depressing the switch 7. The display 5 is displayed with a target lens shape diagram FT to be brought into a state of capable of inputting a processing condition. The target lens shape of the "two points" frame which is stored beforehand in the memory 51 can be taken out from the memory 51.

An operator is brought into a state of capable of inputting a layout data of a frame pupillary distance (FPD), a pupillary distance (PD) of the wearer, a height of a lens optical center referred to a geometrical center of the target lens shape by operating predetermined button keys 501, 502, 503 and the like (see Fig. 4).

Further, the processing condition can be set by operating button keys 510, 511, 512, 513, 514. A material of the lens (plastic, polycarbonate or the like) is selected by the button key 510. Metal, cell, nylol and two points are selected as kinds of the eyeglass frame by the button key 511. Presence/absence of chamfering is selected by the button key 513, and in a case of presence of chamfering, a size of chamfering can be selected. Presence/absence of polishing can be selected by the button key 514.

On the input screen shown in Fig. 4, when two points are selected by the button key 511, a flat processing mode is set as a mode of processing a peripheral edge of the lens and a drilling mode is set along therewith. In the drilling mode, data on the drilling can be inputted from a hole editing screen displayed by depressing the button key 512.

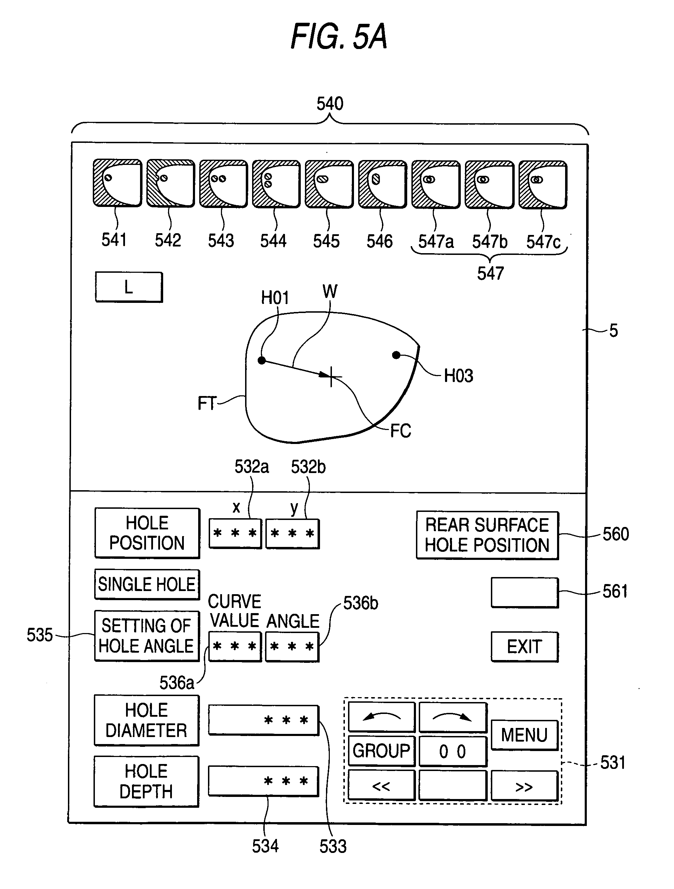

Fig. 5A shows an example of the hole editing screen. The target lens shape diagram FT is displayed at the upper part on the screen of the display 5 on the basis of the inputted target lens shape data. On the basis of the inputted hole position data, holes H01 and H03 are displayed within the target lens shape diagram FT. Various inputting keys used for inputting the hole data are displayed at the lower part on the screen. Among the inputting keys, a select key 560 is prepared for selecting whether the hole position data are inputted with reference to the lens front surface or the lens rear surface. The example of Fig. 5A illustrates the case where the hole position data are inputted with reference to the lens rear surface. The target lens shape diagram FT on the display 5 is displayed as the diagram when the target lens shape of a left eye lens is viewed from the lens rear surface on the basis of the select signal by the select key 560.

A template icon group 540 is prepared at the upper part on the screen. The template icon group 540 is prepared in advance with a number of patterned hole types for a rimless frame. For example, an icon 541 is a template of one hole (single hole) type. An icon 542 is a template combined with a notch and a single hole. An icon 543 is a template of two holes aligned in two in a horizontal direction. An icon 544 is a template aligned with two holes in a vertical direction. Icons 545, 546 are templates of long holes in the horizontal direction, and in the vertical direction, respectively. Icons 547a, 547b, 547c are templates of single holes having spot facing.

Here, according to the icons 547a, 547b, 547c, data of hole diameters of through holes, hole diameters and hole depths of spot facing holes can be previously set/registered on the side of the operator, respectively. The operator can set the data in correspondence with the icons 547a through 547c in accordance with sizes of screws or washers utilized frequently (details thereof will be described later). Thus, when the single hole having the spot facing is processed, the operator can save time and labor of inputting or changing the data of the hole diameters of the through holes, the hole diameters and the hole depths of the spot facing holes.

<Drilling with reference to the lens front surface>

First, an explanation will be given of the case where the drilling is carried out by inputting the hole position data with reference to the lens front surface in order to drill the lens attached to an front-fixing frame. When the method of inputting the hole position data with reference to the lens front surface (the lens front surface reference) is selected by the select key 560, on the basis of this select signal, the target lens shape diagram FT on the display 5 is displayed as the shape when the target lens shape is viewed from the lens front surface. Namely, the target lens shape diagram FT inverted laterally from the example of Fig. 5A is displayed.

Now, it is assumed that the lens attached to the front-fixing frame which is an endpiece type with a single hole is subjected to the drilling. In this case, the operator selects the icon 541 by a touch pen and thereafter drags the icon 541 to a desired position on the target lens shape diagram FT displayed on the display 5. Thereby, the graphic of the hole (H01 and H03 in the example of Fig. 5A) is set. In adjusting each hole position coordinate, after designating a hole number or a group by a button key 531, values of x-axis coordinate data column 532a and a y axis coordinate data column 532b may be changed. Thereby, positions relative to a target lens shape center FC can be changed, respectively. The hole position coordinates can also be inputted as a distance from the edge of the lens by selecting the setting of the coordinate reference by the key 561. The x-axis coordinate data and the y-axis coordinate data which are the hole position data of the lens front surface can be acquired from the design data of the rimless frame and the hole position of a demo lens DLE.

The hole diameter can be inputted by an input column 533. In the case of performing spot facing, the hole depth is inputted. The value of the hole depth can be inputted by an input column 534. When the respective input columns are depressed, ten keys are displayed so that numerical values can be inputted.

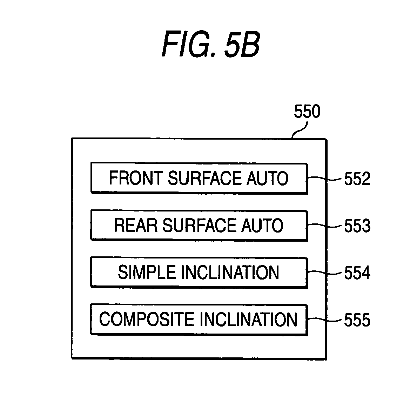

With regard to setting a hole angle, when a hole angle setting mode selecting button key 535 is depressed, a hole angle setting mode selecting menu 550 as shown in Fig. 5B is popped up to display. When a front surface auto button 552 is selected, it provides a mode of automatically setting the hole angle perpendicular to a lens surface at the hole position of the lens front surface (normal line direction). When a rear surface auto button 553 is selected, it provides a mode of automatically setting the hole angle orthogonal to a lens surface at the hole position of the lens rear surface (normal line direction). When a simple inclination button 554 is selected, it provides a mode capable of arbitrarily setting the angle in the direction oriented to the chuck axis. In this case, the angle can be set by directly inputting the angle in an angle display column 536b. 0° is set in parallel to the chuck axis. When a composite inclination button 555 is selected, it provides a mode capable of arbitrarily setting angles of inclination in x-axis (horizontal) direction and y-axis (vertical) direction, respectively so that the display column capable of inputting the x-axis (horizontal) direction and the y-axis (vertical) direction is displayed.

An explanation will be given of the case where the hole is formed vertically to the surface at the hole position of the lens front surface by selecting the auto button 552. The operator chucks the lens LE by the lens chuck axes 102R and 102L. When the processing is started, first, the edge position measuring portions 300F and 300R are driven by the control portion 50. Thereby, on the basis of the target lens shape, the edge positions of the lens front surface and lens rear surface are measured. In the mode of drilling vertically to the lens front surface, on the basis of the hole position data inputted with reference to the lens front surface, as shown in Fig. 6A, two points of a point P1 at the hole position on the lens front surface and a point P2 (point in the vicinity of the point P1) outside by a predetermined distance (0.5 mm) therefrom are measured by the measuring portion 300F, thereby detecting the hole positions in the direction of the lens chuck axes, respectively. By a line Sf connecting the points P1 and P2, the angle of inclination of the lens surface is obtained. If the line Sf has been obtained, an angle $\alpha2$ (see Fig. 6A) formed by a normal line direction perpendicular to the line Tf and the direction of the lens chuck axes is obtained. Thus, the hole angle perpendicular to the lens surface is set.

Upon completion of the measurement of the lens edge position, the lens peripheral edge of the lens LE is roughed by a roughing grindstone 162a on the basis of the target lens shape. Further, it is finished to be flat by a finishing grindstone 162b. Thereafter, the processing is advanced to drilling by the mechanism 400. The control portion 50, as shown in Fig. 6B, tilts the rotating axis of the end mill 435 on the basis of the hole angle α2 previously acquired. Further, in order to locate the hole position on the plane including the lens chuck axes and rotating axis of the end mill 435, the lens LE is rotated on the basis of the hole position data. After the tip of the end mill 435 has been located at the hole position P1, the lens LE is moved toward the direction of the angle α2 by driving the carriage 101 in the XY directions. Thus, the hole is processed in the direction of the angle α2 passing the hole position P1 of the lens surface. Where the hole angle is set in an arbitrary direction, on the basis of this angle, the rotating axis of the end mill 435 is tilted, and the lens LE is moved on the basis of the angle so as to pass the hole position P1, thereby similarly performing the drilling.

<Drilling with reference to the lens rear surface>

An explanation will be given of the operation of carrying out the drilling by inputting the hole position data with reference to the lens rear surface in order to drill the lens attached to a rear-fixing frame, with mainly focusing on the difference from the lens front surface reference.

The method of inputting the hole position data with reference to the lens rear surface (the lens rear surface reference) is selected by the select key 560. On the basis of this select signal, the target lens shape diagram FT on the display 5, as shown in Fig, 5A, is displayed as the shape when the target lens shape is viewed from the lens rear surface. The hole position data can be inputted in the same manner as in the case of the lens front surface reference previously explained. The hole position data (x-y axes coordinate data in Fig. 5A) on the lens rear surface can be acquired from the design data of the rimless frame and the hole position of the demo lens DLE. The hole position data of the demo lens can be obtained by measuring the hole position of the lens rear surface using a well known measuring device. They can be also obtained by picking up the rear surface of the demo lens placed on a lens table using an image pick-up camera such as a CCD camera and measuring the hole position referred to the center of the target lens shape.

As described above, in inputting the hole position data on the lens rear surface, the target lens shape diagram FT is displayed as the shape when the target lens shape is viewed from the lens rear surface. For this reason, without confusing with the hole position on the lens front surface, the hole position referred to the lens rear surface can be easily known and the hole position data can be appropriately inputted. Further, in setting the hole angle, the desired mode can be selected from the hole angle setting mode selecting menu 550 as shown in Fig. 5B.

An explanation will be given of the case where with regard to setting the hole position with reference to the lens rear surface (inputting of the hole position data), the hole angle is set perpendicularly to the surface at the hole position of the lens front surface (normal line direction) by the front surface auto button 552. When the front surface auto button 552 is selected, as shown in Fig. 5A, displayed aside the select button key 535 are a column 536a of inputting the curve value of the lens front surface and a display column 536b where the hole angle (angle in the direction toward the lens chuck axes) computed by inputting the curve value of the lens front surface is displayed. The curve on the front surface of the processed lens can be measured by a curve meter.

An explanation will be given of inputting the curve value of the front surface of the processed lens and setting the hole angle in accordance with the lens front surface curve. Fig. 7 is a partial sectional view on the ear side in a state of attaching the demo lens DLE in a rimless frame (rear-fixing frame) of one hole having a turn-stopping contact area extending from the lens rear side to the lens edge surface. In the rear-fixed type frame of the endpiece type with one hole, an end piece 604 constituting a member of connecting the rear-fixing frame is fixed to a hole opened at the demo lens DLE by using one screw 602. Further, a contact area 606 bent from the endpiece 604 forward for a wearer is fixed to be brought into contact with an end surface (edge surface) of the demo lens DLE. Further, a temple 610 is extended from the contact portion 606. By bringing the contact area 606 into contact with the end surface of the demo lens DLE, the frame from the endpiece 604 to the temple 610 is prevented from being turned. Also a bridge (not shown) of the nose side portion is similarly provided with a connecting member in correspondence with the endpiece 604 and a contact area, which are fixed to the hole formed at the demo lens DLE by the screw.

In Fig. 7, the demo lens DLE is drilled to form the hole in a direction of the normal line L1 perpendicular to the front surface of the demo lens DLE at a position P1 at a distance W from the target lens shape center FC. Further, it is assumed that the demo lens DLE is fixed by the screw 602. It is assumed that the demo lens DLE having the surface curve, for example, of a curve value C of 4 curve is attached. Normally, when the hole is opened perpendicularly to the surface of the lens front surface (normal line direction), a state of bringing the screw 602 into contact with the lens front surface is easy to be stabilized. Therefore, there is frequently a case of opening the hole in the direction perpendicular to the lens front surface (normal line direction) in the demo lens. Further, the curve value expressing the lens curve customarily is indicated by a numerical value constituted by dividing 523 by a radius (mm) of the curve.

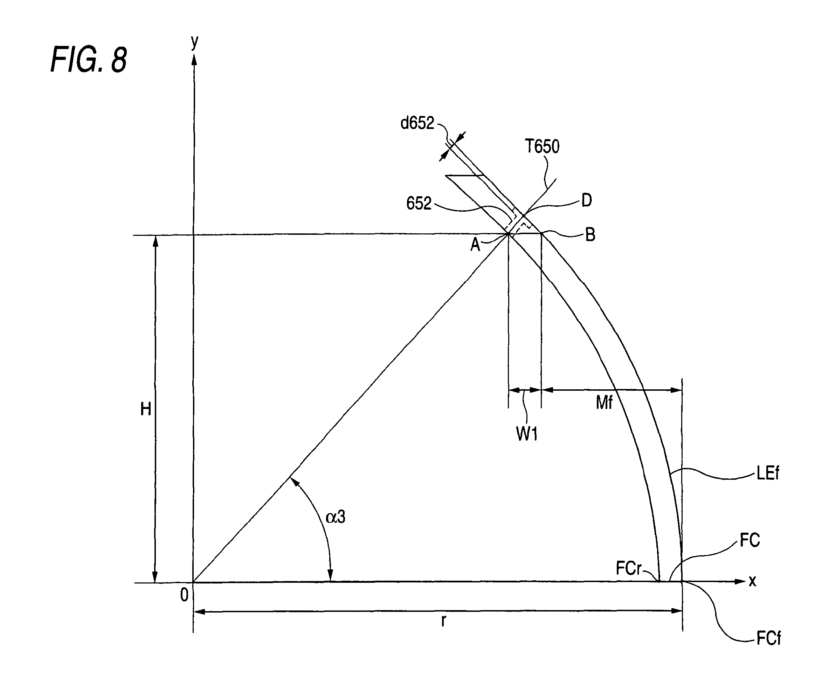

Fig. 8 is a view for explaining the method of setting the hole angle in the direction perpendicular to the lens front surface in designating the hole position with reference to the lens rear surface. The x-axis and γ-axis on Fig. 8 are axes for convenience for explanation, which are different from the X-axis and Y-axis in the apparatus construction in Fig. 1 and the x-axis and γ-axis in Fig. 5A. In Fig. 8, the center of the curvature of a lens front surface curve LEf is located at a center point O and the center FC of the target lens shape is located on the x-axis. It is assumed that the x-axis coincides with the chuck axes 102L and 102R. The point A on the lens rear surface side indicates the hole position designated with reference to the lens rear surface. The point B indicates the position on the lens front surface LEf side in the direction passing the point A and also in parallel to the x-axis.

First, an explanation will be given of the determination of the center point O. Using the curve value of the lens front surface inputted in the curve value input column 536a, the radius r of the front surface curve (numerical value obtained by dividing 523 by the curve value) is acquired by the control portion 50. Since the front surface position on the x-axis constituting the chuck axes is known, the position of the target lens shape center FCf on the lens front surface side is also known. Since the distance from the target lens shape center FCf on the lens front surface side is the radius r, the position of the point O on the x-axis is thereby acquired.

The points A and B in the x-axis direction (i.e, direction of holding the lens LE by the lens chuck axes 102L and 102R) are detected by contact of the measuring piece 306R of the measuring portion 300R and the measuring piece 306F of the measuring portion 300F, respectively. The measuring portions 300R and 300F are driven by the control portion 50 on the basis of the hole position data inputted.

In Fig. 8, assuming that the distance from the point A to the point B is W1, the distance between the point B and the target lens shape center FCf on the front surface side in the x-axis direction is Mf, and the distance between the point O and the point A (or point B) in the $\gamma$-axis direction (which is acquired from the hole position data) is H, the coordinates of the point A is (r-W1-Mf, H) in the order of the positions on the x-axis and the y-axis. The coordinates of the point B is (r-Mf, H).

Further, as regards the lens front surface LEf, the following conditional equation (Equation 1) holds:

## Equation 1

$$x^2 + y^2 = r^2$$

Further, as regards the straight line T650 passing the points O and A, assuming that its increasing coefficient (inclination) in the y-axis direction for the x-axis direction is S, the following relational equation (Equation 2) holds:

## Equation 2

$$y = Sx$$

By substituting the coordinates (r-W1-Mf, H) of the point A for Equation 2, S is obtained. Further, by substituting S thus obtained for Equation 2, the following relational equation (Equation 3) results:

## Equation 3

$$y = \frac{H}{(r - Mf - W1)} x$$

By solving simultaneous equations of Equation 1 and Equation 3, the position of an intersection point D of the straight line T650 and the lens front surface LEf is acquired. The point D means the position on the side of the lens front surface LEf in the case where a hole is opened to pass the point A and also to be perpendicular to the lens front surface LEf. The hole angle $\alpha 3$ in the direction passing the point A, i.e. the hole position on the lens rear surface and being nearly perpendicular to the lens front surface LEf is acquired by the relational equation relative to the straight line T650, i.e. Equation 3

Further, in an actual drilling, in order to acquire the hole position on the lens front surface in the x-axis direction more precisely, it is preferable to measure the edge position on the lens front surface by the measuring portion 300F on the basis of the position of the point D on the y-axis direction. Particularly, where a spot-facing hole 652 is set, the position of the point D constitutes the standard of the hole depth d652 which is set on the input column 534. Since the hole position on the lens front surface in the x-axis direction is acquired precisely, the hole depth designated by spot facing (hole depth in the direction perpendicular to the lens front surface) can be assured precisely.

Further, the moving speed of an end mill 435 for the lens LE during the drilling is set to be slower than its moving speed until the tip of the end mill 435 reaches the lens front surface. This intends to operate the end mill 435 so that it repeats the advance and retreat for the lens LE during the drilling to exhaust cutting lees. On the contrary, if the moving speed of the end mill 435 toward the hole is set to be equal to that during the drilling, disadvantageously, the time taken from the start of processing to the end thereof is greatly lengthened.

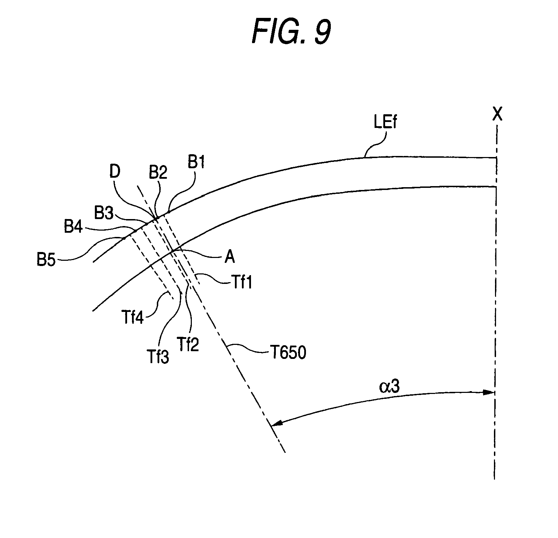

Additionally, the hole angle perpendicular to the lens front surface may be acquired in the following manner without inputting the curve value of the front surface. As shown in Fig. 9, on the front surface LEf, a plurality of positions Bn (B2, B3, B4, ...) in the outside vicinity of the position of the point B1 nearly opposite to the point A of the hole position inputted with reference to the lens rear surface are measured by the measuring portion 300F. Further, by acquiring the linear segments connecting the two points between the measured positions, the angles of inclination Sfn (Sf1, Sf2, ...) of the lens front surface LEf are acquired. The measurement is carried out at small intervals of e.g. 0.5 mm. On the basis of the angles of inclination Sfn at every small angles, the corresponding perpendicular lines Tfn (Tf1, Tf2, ...) are acquired, respectively. By the parallel movement of the respective perpendicular lines Tfn within the range between the two points, the straight line T650 passing the point A of the hole position on the lens rear surface is acquired. Thus, the hole angle $\alpha 3$ in the direction nearly perpendicular to the lens front surface is set. The hole position on the lens front surface can be acquired by computing the intersection point D between the straight line T650 and the linear segment connecting the two points on the lens front surface where the straight line T650 passes.

In accordance with this method, although time is slightly lengthened owing to an increase in the measured points on the lens front surface, the hole angle $\alpha 3$ perpendicular to the lens front surface can be set more precisely. The hole position D passing the lens front surface can be acquired more precisely.

The drilling operation will be explained. First, the measuring portions 300F and 300R are driven by the control portion 50. On the basis of the hole position data inputted with reference to the lens rear surface, the point A on the lens rear surface and the point B on the lens front surface are measured, thereby setting the angle $\alpha 3$ in the direction passing the hole position A on the lens rear surface and being perpendicular to the lens front surface. Upon completion of the measurement of the lens positions, the peripheral edge of the lens LE is roughed and thereafter finished to be flat. Subsequently, the rotating axis of the end mill 435 is inclined at the hole angle $\alpha 3$ set as described above so as to pass the hole position (point A in Figs. 8 and 9) inputted with reference to the lens rear surface. Along therewith, by driving the carriage 101 in the XY directions, the lens LE is moved toward the end mill 435 in the direction of the angle $\alpha 3$. Thus, the drilling is carried out in the direction of the angle $\alpha 3$ passing the hole position on the lens rear surface (point A in Figs. 8 and 9). The drilling may be carried out prior to the processing of the lens peripheral edge.

In the drilling, the lens LE is moved at a relatively high speed until the tip of the end mill 435 reaches the point D which is the position on the lens front surface. After the tip of the end mill 435 has reached the position on the lens front surface, the moving speed of the lens LE is reduced so that the end mill 435 moves while repeating the advance and retreat for the lens LE in order to exhaust cutting lees. Thus, the processing time is shortened while assuring the precision of the drilling.

Next, in the construction in which the flat-finishing surface of the finishing grindstone 162b is not in parallel to the chuck axis and the lens peripheral edge (lens edge) after the flat-finishing is processed to have an inclination, an explanation will be given of the case of carrying out the drilling by inputting the hole position data with reference to the lens rear surface.

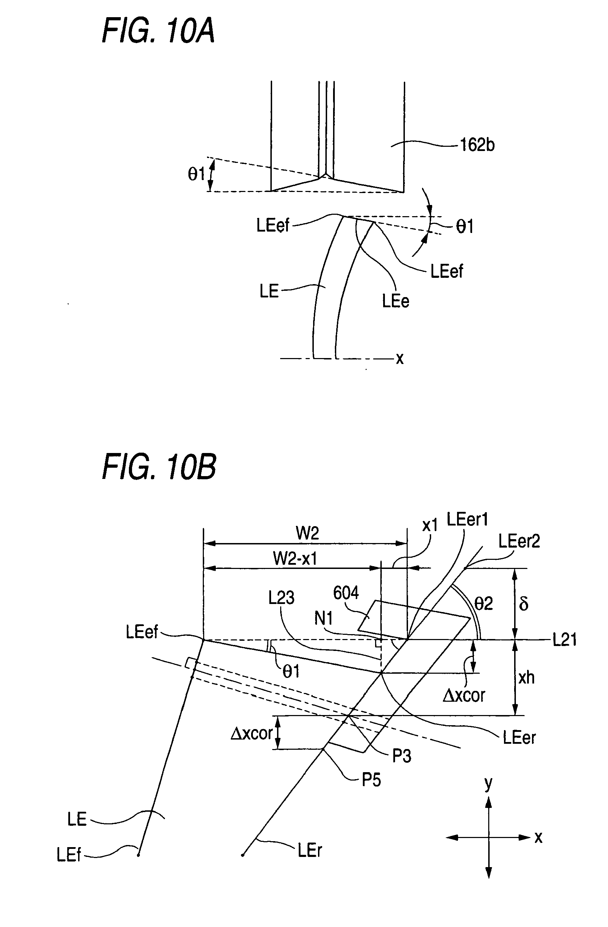

In Fig. 10A, since the flat-finishing surface of the finishing grindstone 162b is inclined by an angle $\theta 1$ relative to the chuck axis (X-axis), the edge LEe of the lens LE after the flat finishing is finished to have the inclination of the angle $\theta 1$. Generally, in order that the lens front surface looks nice, the angle $\theta 1$ is set so that the edge position LEer on the lens rear surface is located more inside than the edge position LEef of the lens front surface. The angle $\theta 1$ is for example 2.5°.

Fig. 10B is a sectional view of the lens LE after the flat-finishing. In the rear-fixing frame, it is assumed that the distance from the lens edge position on the lens rear surface of the demo lens to the hole position P3 on the lens rear surface is xh. Where the distance from the target lens shape center is inputted, by subtracting the inputted distance from the target lens shape data, the distance xh is acquired. It is assumed that the lens edge of the demo lens does not have the angle $\theta 1$ but in parallel to the x-axis. Since the target lens shape data represents the lens front surface shape, if the drilling is carried out at the hole position relative to the edge position LEef on the lens front surface, a gap $\Delta$xcor will be generated between the endpiece 604 of the rear-fixing frame and the edge position LEer on the lens rear surface after the finishing. In this case, the contact state of the lens endpiece 604 with the lens rear surface LEr and lens edge LEer becomes unstable so that the turn of the frame cannot be stopped.

In order to avoid such inconvenience, where the hole position data referred to the lens rear surface (now, distance xh from the lens edge) are inputted, the drilling is carried out at the hole position P5 obtained by correcting the hole position P3 on the lens rear surface inwardly by the gap $\Delta$xcor.

The correction of the gap $\Delta$xcor will be explained. First, on the basis of the target lens shape data, by the measurement by means of the measuring portions 300F and 300R, the edge position LEef on the lens front surface and the first edge position LEer1 on the lens rear surface are acquired. Further, as regards the lens rear surface, its outside or inside from the target lens shape by the distance $\delta$ (0.5 mm) is measured thereby to acquire the second edge position LEer2. It is assumed that the angle $\theta2$ formed by the linear segment connecting these two points with the x-axis approximately constitutes the angle of inclination of the lens rear surface LEr. The angle of inclination $\theta2$ can be acquired from the first edge position LEer1 and second edge position LEer2.

Further, it is assumed that the straight line passing the first edge position LEer1 and being in parallel to the x-axis is L21 and the perpendicular line drawn from the lens edge LEer toward the straight line L21 is L23. It is assumed that the intersection point of the perpendicular line L23 and straight line L21 is point N1. Assuming that the distance from the lens edge LEef to the lens edge LEer1 is W2 and the distance from the point N1 to the lens edge LEer1 is x1, the following relational equations Equation 4 and Equation 5 hold:

## Equation 4

$$x1 \tan\theta2 = (W2 - x1)\tan\theta1$$

## Equation 5

$$\Delta xcor = x1 \tan\theta2$$

Next, by solving Equation 4 and Equation 5 for $\Delta xcor$, the following relational equation Equation 6 holds:

## Equation 6

$$\Delta xcor = \frac{\tan\theta1 \tan\theta2}{\tan\theta1 + \tan\theta2} W2$$

Since the distance W2 can be acquired by measuring the edge positions on the lens front surface and lens rear surface, from Equation 6, $\Delta xcor$ can be acquired. Namely, the edge position LEer on the lens rear surface expected after the finishing is acquired. Thus, the position P5 shifted from the inputted hole position P3 by $\Delta xcor$ can be acquired.

Next, a brief explanation will be given of the case where the hole will be processed in the direction perpendicular to the lens surface at the hole position of the lens rear surface (normal line direction) using the rear surface auto button 553. When this processing mode is selected, the two points of the point A of the hole position on the lens rear surface in Fig. 8 and the position (not shown) outside this point by a predetermined distance (0.5 mm) are measured by the measuring portion 300R. Thus, the positions in the direction of the lens chuck axes are detected, respectively. By the linear segment connecting these two points, the angle of inclination of the lens rear surface at the point A of the hole position is approximately acquired. After the angle of inclination of the lens rear surface is acquired, the angle $\alpha4$ perpendicular thereto (not shown) is set by the control portion 50.

In the drilling, the rotating axis of the end mill 435 is inclined according to the angle $\alpha4$ and the lens LE is moved in the direction of the angle $\alpha4$ by driving the carriage 101 in the XY directions so that the tip of the end mill 435 passes the point A of the hole position on the lens rear surface. Thus, the drilling is carried out in the direction perpendicular to the lens rear surface by inputting the hole position with reference to the lens rear surface.

In order to process the hole in the rear-fixing frame, the hole position is inputted with reference to the lens rear surface. However, whether the direction of the hole angle should be set perpendicular to the lens front surface or perpendicular to the lens rear surface may be selected according to whether the lens LE is a minus lens or a plus lens. Generally, in the demo lens, its lens thickness degree is constant and the endpiece of the rear-fixing frame is attached along the lens rear surface. In the case of the minus lens, the curve of the lens rear surface is changed according the lens degree and the curve of the lens front surface changes less than that of the lens front surface of the demo lens. For this reason, in the case of the minus lens, by setting the hole angle in the direction perpendicular to the lens front surface, the opening angle of the temple of the rear-fixing frame with the demo lens attached may be adjusted by a small degree. On the contrary, in the case of the plus lens, the curve of the lens front surface is changed according the lens thickness degree and the curve of the lens rear surface changes less than that of the lens rear surface of the demo lens. For this reason, in the case of the plus lens, by setting the hole angle in the direction perpendicular to the lens rear surface, the opening angle of the temple of the rear-fixing frame with the demo lens attached may be adjusted by a small degree.

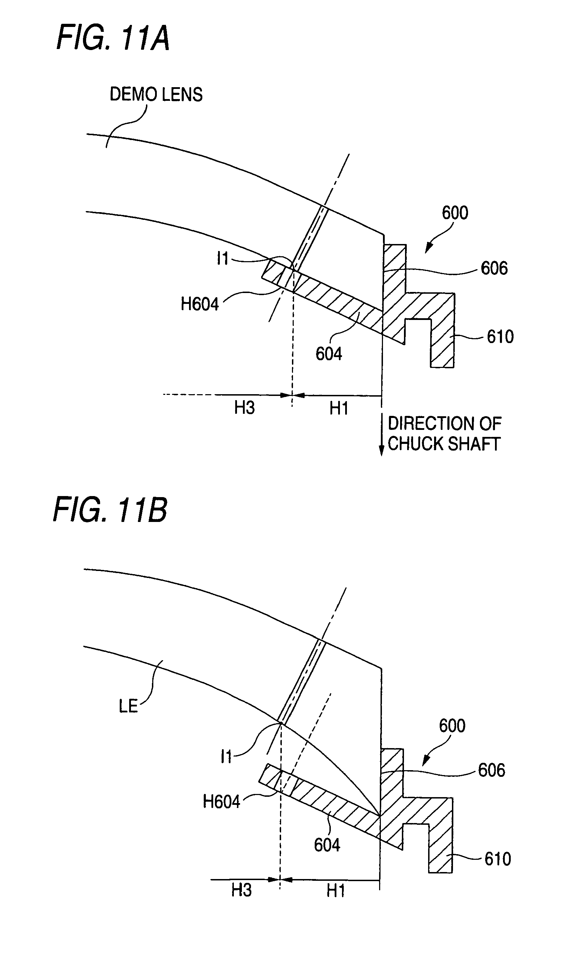

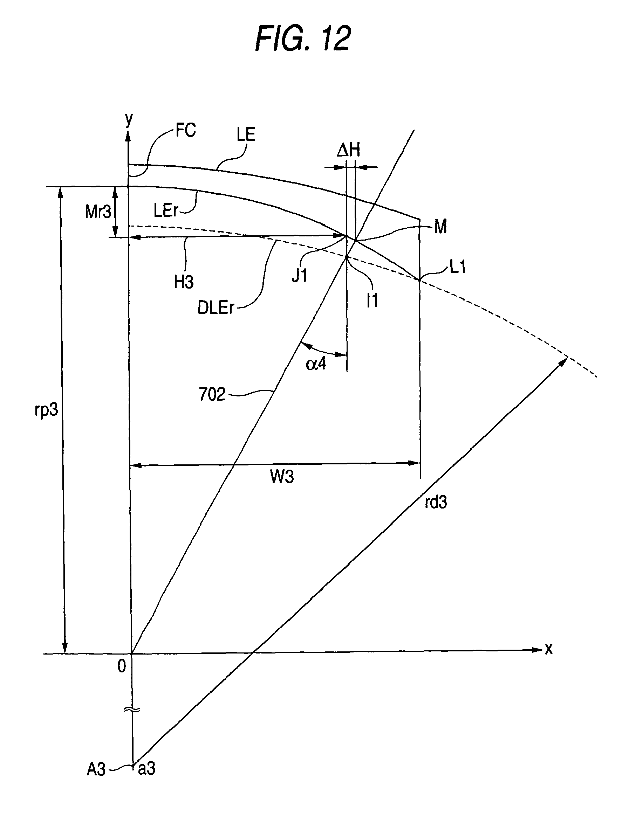

Next, a preferable correcting method will be explained in the case where in the rear-fixing frame, the rear surface curve of the demo lens and that of the lens LE are greatly different from each other. In the demo lens, where the rear surface curve of the lens LE in Fig. 11 B is greatly different from that of the demo lens in Fig. 11A, by attaching a rear-fixing frame 600 in a state moved in parallel in the direction of the chuck axes, the opening angle of the temple 610 may be adjusted by a small degree. In the attaching in Fig. 11B, by inserting an adjusting washer in the gap between the lens rear surface and the endpiece 604 of the rear-fixing frame, the rear-fixing frame can be stably attached. However, with the hole position 11 (distance H1 from the lens edge or distance H3 from the target lens shape center) referred to the lens rear surface of the demo lens, if the drilling is carried out, its deviation from the center of the screw hole H604 in the endpiece 604 will increase. The method for avoiding such an inconvenience will be explained referring to Fig. 12.

In Fig. 12, schematically, the curvature center of the lens rear surface LEr is located at point O and the target lens shape center FC is located on the y-axis. The x-axis and y-axis in Fig. 12 are axes for convenience for explanation and different from the x-axis and y-axis in Fig. 8. It is assumed that y-axis coincide with the chuck axes 102L and 102R. By inputting the hole position I1 data referred to the lens rear surface, the position of point J1 in the $\gamma$-axis direction on the lens rear surface LEr is detected by measuring portion 300R. Since the position of the lens rear surface on the $\gamma$-axis is known by movement of the tip of the lens chuck axis 102R, the distance Mr3 from the point J1 in the $\gamma$-axis direction to the lens rear surface position on the $\gamma$-axis can be acquired. Further, assuming that the curve radius of the lens rear surface LEr is rp3, the following Equation 7 holds. H3 denotes the distance of the point J1 in the x-axis direction which is given by inputting the hole position I1.

## Equation 7

$$H3^2 + (rp3 - Mr3)^2 = rp3^2$$

The radius rp3 may be inputted by the measurement of the lens rear surface by a curve meter. As regards the locus on the lens rear surface LEr, the relationship expressed by the following Equation 8 holds.

## Equation 8

$$x^2 + y^2 = rp3^2$$

Further, it is assumed that the edge position expected after the finishing of the lens rear surface LEr is point L1. Now, for simplicity of explanation, it is assumed that the end surface of the lens LE has been finished in parallel to the lens chuck axis (y-axis). The value of the point L1 in the y-axis direction is acquired from the measurement by the measuring portion 300R on the basis of the target lens shape data. Assuming that the radius of the lens rear surface curve of the demo lens is rd3, the distance from the y-axis to the point L1 is W3, the center of the radius rd3 of the demo lens rear surface DLEr passing the point L1 is point A3 and its value on the y-axis is a3, as regards the locus of the demo lens rear surface DLEr, the following Equation 9 holds.

## Equation 9

$$x^2 + (y - a3)^2 = rd3^2$$

The value of rd3 is inputted by measuring the lens rear surface of the demo lens. When rd3 is given, the value of a3 is acquired by substituting the value of point L1 on the x-axis, i.e. W3 for Equation 8 and substituting the y-coordinate of the point L1 thus acquired for Equation 9. The equation thus acquired is expressed as follows.
## Equation 10

$$x^2 + \left\{ y - \left( \sqrt{\left( \frac{H3^2 + Mr3^2}{2Mr3} \right)^2 - W3^2} - \sqrt{rd3^2 - W3^2} \right) \right\}^2 = rd3^2$$

The straight line 702 that is the locus of drilling passes the point 11 which is the center of the screw hole H604 of the end piece 604, and its hole angle is oriented in the direction of angle $\alpha4$ from the lens chuck axis. The angle $\alpha4$ is the value previously inputted as an optional angle or the value as the angle of the normal line direction to the lens front surface. At this time, assuming that the coefficient of increase in the y-axis direction for the x-axis direction is b3, the straight line 702 can be expressed as the following relational equation, Equation 11.
## Equation 11

$$y = b3x + C3$$

Further, the coordinate I1 is calculated by substituting x=H3 for Equation 10. The coefficient of increase b3 can be expressed by $\tan(\pi/2-\alpha4)$. Further, by substituting the coordinate I1 for Equation 11, the y-axis intercept C3 of Equation 11 is calculated. The y-axis intercept C3 thus calculated is substituted for Equation 11. Thus, this is summarized as
## Equation 12

$$y = \tan\left( \frac{\pi}{2} - \alpha4 \right) x + \left\{ a3 + \sqrt{rd3^2 - H3^2} - H3 \tan\left( \frac{\pi}{2} - \alpha4 \right) \right\}$$

By solving the simultaneous equations of Equation 12 and Equation 8, the position coordinate of the point M where the lens rear surface LEr and the straight line 702 intersect is acquired. This point M is set as the hole position of the lens rear surface and the quantity of deviation $\Delta H$ between the point J1 and the point M is acquired as a difference therebetween. The drilling is carried out in the direction passing the point M at the angle $\alpha4$.

If inputting the hole position data referred to the lens rear surface is selected, by the method described above, the control portion 50 performs correction operation for the inputted hole position data for the position of the point M. Thus, the deviation between the screw hole H604 of the endpiece 604 and the hole position on the lens rear surface is corrected so that in assembling the rear-fixing frame, the opening angle of the temple 610 can be adjusted by a small degree, thereby facilitating the adjustment.

As illustrated in Figs. 10A and 10B, where the edge end surface of the lens LE after the flat finishing is processed at an inclination of the angle $\theta1$, as described above, it is preferred to correct the hole position on the basis of the gap $\Delta xcor$. Further, as regards the radius rp3 of the lens rear surface LEr curve, as in Fig. 9, the inclination of the lens rear surface can be acquired on the basis of the measurement results of the plurality of positions on the lens rear surface by the measuring portion 300R. As is apparent from the above description, the measuring and detecting methods is not limited to the above embodiment. Of course, various methods which are known in the art and various simple methods may be employed.

## Claims

**1.** An eyeglass lens processing apparatus for processing a periphery of an eyeglass lens, the apparatus comprising:

a drilling tool (400, 435) which is arranged to perform a drilling from a front side or a rear side of the lens to form a hole through the lens;

an inclining unit (400, 430) that inclines a processing axis of the drilling tool by an arbitrary angle relative to a lens chuck shaft;

a hole position data inputting unit (5) that includes a selector for selecting an input screen in which hole position data referring to a lens front surface is to be input or an input screen in which hole position data referring to a lens rear surface is to be input;

a hole angle setting unit (535, 550, 552, 553, 554, 555) that includes a setting screen for setting an angle of the hole to be formed through the lens, and a selector for selecting if the angle of the hole coincides with a normal line of a lens surface of the lens;

a lens position measuring unit (300F, 300R) that measures the lens surface in a direction of the lens chuck shaft by bringing a measuring piece into contact with the lens front surface and/or the lens rear surface; and

an arithmetic and controlling unit (5) that, in the case that a reference surface referred by the input hole position data is the lens surface from which the drilled is performed by the drilling tool, measures the lens surface from which the drilled is performed and obtains data for drilling based on the measured lens surface and the input hole position data, and in the case that the reference surface is the lens surface other than the lens surface from which the drilled is performed, measures the other lens surface and obtains data for drilling which defines that the hole to be formed passes through a hole position on the measured other lens surface and has the set angle based on the input hole position data.

2. The eyeglass lens processing apparatus according to claim 1, wherein
the drilling tool is arranged to perform the drilling from the lens front surface;
when the hole position data referring to the lens front surface is input by the hole position data inputting unit and the angle of the hole is set by the hole angle setting unit to coincide with the normal line of the lens front surface, the arithmetic and controlling unit obtains an inclination angle of the hole position on the lens front surface by the lens position measuring unit and obtains a direction of the normal line based on the inclination angle.

3. The eyeglass lens processing apparatus according to claim 1 further comprising an inputting unit that inputs a front surface curve of the lens,
wherein the drilling tool is arranged to perform the drilling from the lens front surface,
wherein when the hole position data referring to the lens rear surface is input by the hole position data inputting unit and the angle of the hole is set by the hole angle setting unit to coincide with the normal line of the lens front surface, the arithmetic and controlling unit obtains a hole position on the lens rear surface and a position of the lens front surface which is separated from a processing center of the lens by a length by which the obtained hole position is separated from the processing center, and obtains a direction of the normal line and a processing starting position on the lens front surface based on the input front surface curve.

4. The eyeglass lens processing apparatus according to claim 1, wherein
the drilling tool is arranged to perform the drilling from the lens front surface,
when the hole position data deferring to the lens rear surface is input by the hole position data inputting unit and the angle of the hole is set by the hole angle setting unit to coincide with the normal line of the lens front surface, the arithmetic and controlling unit obtains the hole position on the lens rear surface by the lens position measuring unit and obtains an angle of the normal line based on position data of at least two points on the lens front surface, the two points being located further than the obtained hole position on the lens rear surface from a processing center of the lens.

5. The eyeglass lens processing apparatus according to claim 1, further comprising:

a flat-finishing tool that includes a processing surface for flat-finishing an end surface of the lens to be inclined inwardly by a predetermined angle;

an edge position detector that detects edge positions on the lens front surface and the lens rear surface based on a target lens shape data;

a correcting unit that inputs hole position data referring to the lens rear surface, obtains an edge position on the lens rear surface expected after the finishing based on the edge positions of the lens front surface and the lens rear surface detected by the edge position detector and the predetermined angle of the end surface, and corrects the hole position on the lens rear surface input by the hole position data inputting unit based on a difference between the obtained edge position of the lens rear surface and an edge position of the target lens shape data.

6. The eyeglass lens processing apparatus according to claim 5, wherein the lens position measuring unit includes the edge position detector.

7. The eyeglass lens processing apparatus according to claim 1, wherein the hole position data inputting unit includes a display for displaying a target lens shape diagram and a display controller that laterally inverting the target lens shape diagram depending on whether the hole position data is referred to the lens front surface or the lens rear surface.

EP 1 952 943 A2

## FIG. 1

EP 1 952 943 A2

## FIG. 2

# FIG. 3

# FIG. 4

## FIG. 5A

# FIG. 5B

## FIG. 6A

## FIG. 6B

## FIG. 7

FIG. 8

EP 1 952 943 A2

# FIG. 9

## FIG. 10A

## FIG. 10B

## FIG. 11A

DEMO LENS

600

606

I1

H604

604

610

H3

H1

DIRECTION OF
CHUCK SHAFT

## FIG. 11B

LE

I1

600

606

H604

604

610

H3

H1

# FIG. 12

**REFERENCES CITED IN THE DESCRIPTION**

**Patent documents cited in the description**

- US 20060178086 A1
- JP 2006189659 A
- JP 2006239782 A
- US 6790124 B
- JP 2003145328 A
- US 5333412 A
- JP 4093164 A